# EUROPÄISCHE PATENTSCHRIFT

(11) **EP 1 259 400 B1**
(45) Veröffentlichungstag und Bekanntmachung des Hinweises auf die Patenterteilung: **09.06.2004**
(21) Anmeldenummer: 01911546.8
(22) Anmeldetag: 29.01.2001
(51) Int. Cl.: B60Q 3/02

(54) **INNENRAUMBELEUCHTUNGSSYSTEM EINES KRAFTFAHRZEUGES SOWIE VERFAHREN ZUR STEUERUNG EINES SOLCHEN**
INTERIOR LIGHTING SYSTEM FOR A MOTOR VEHICLE AND A METHOD FOR CONTROLLING THE SAME
SYSTEME D'ECLAIRAGE DE L'HABITACLE D'UN VEHICULE ET PROCEDE DE COMMANDE DUDIT SYSTEME

(30) Priorität: 17.02.2000 DE 10006943
(43) Veröffentlichungstag der Anmeldung: 27.11.2002
(73) Patentinhaber: Volkswagen Aktiengesellschaft, 38436 Wolfsburg (DE)
(72) Erfinder: MÜLLER, Michael, 38518 Gifhorn (DE); HILLER, Mathias, 38542 Leiferde (DE)
(86) Internationale Anmeldenummer: PCT/EP2001/000926
(87) Internationale Veröffentlichungsnummer: WO 2001/060659

(56) Entgegenhaltungen:
- EP-A- 0 772 378
- DE-A- 4 232 545
- US-A- 5 143 437
- PATENT ABSTRACTS OF JAPAN vol. 018, no. 041 (M-1546), 21. Januar 1994 (1994-01-21) & JP 05 270314 A (HINO MOTORS LTD), 19. Oktober 1993 (1993-10-19) in der Anmeldung erwähnt

## Beschreibung

Die Erfindung betrifft ein Innenraumbeleuchtungssystem eines Kraftfahrzeuges sowie ein Verfahren zur Steuerung eines solchen, mit den Merkmalen der Oberbegriffe der unabhängigen Ansprüche 1 und 12.

Gegenwärtig umfasst eine typische Innenraumbeleuchtung eines Kraftfahrzeuges eine Beleuchtungsvorrichtung, die ein im wesentlichen weißes Licht ausstrahlt und im Fahrzeughimmel im vorderen Bereich des Innenraumes angeordnet ist. Bisweilen sind dieser Beleuchtungsvorrichtung weitere Lichtquellen zugeordnet, beispielsweise auf der Höhe einer Rückbank oder im Kofferraum. Die Innenraumbeleuchtung dient der besseren Orientierung ein- und aussteigender Personen sowie bei einer Be- und Entladung des Fahrzeuges. Sie wird üblicherweise über das Öffnen einer Fahrzeugtür beziehungsweise einer Zentralverriegelung des Fahrzeuges mittels einer Steuereinheit aktiviert. Wird eine Fahrzeugtür geöffnet, so schaltet sich die Innenraumbeleuchtung ein. Nach dem Schließen der Tür wird die Innenraumbeleuchtung unmittelbar oder zeitverzögert ausgeschaltet, wobei dies gegebenenfalls mit einem Starten des Motors gekoppelt ist.

Nach Abschaltung einer solchen Beleuchtungsvorrichtung bleibt im Fahrzeuginnenraum lediglich eine Armaturenbeleuchtung aktiv, deren Helligkeit und - wie aus der EP 562 332 A1 bekannt - deren Farbe manuell einstellbar ist. Die Armaturenbeleuchtung und gegebenenfalls weitere Beleuchtungsvorrichtungen für Bedienelemente, wie Türgriff oder Zigarettenanzünder, dienen nicht der Innenraumbeleuchtung und sind zweckmäßigerweise an eine Aktivierung einer Fahrzeugaußenbeleuchtung gekoppelt.

Nachteilig an gegenwärtigen Innenraumbeleuchtungen für Kraftfahrzeuge ist, dass diese nur im Zusammenhang mit dem Öffnen einer Fahrzeugtür aktiviert und mit dem Schließen der Tür oder mit einer kurzen Verzögerung ausgeschaltet werden, so dass der Innenraum während der Hauptdauer des eigentlichen Fahrzeugbetriebes dunkel ist. Möchte ein Insasse bei dunkler Fahrzeugumgebung einen Gegenstand suchen oder eine Karte lesen, so muss er die Innenraumbeleuchtung manuell einschalten, woraus sich ein Aufmerksamkeitsverlust für die Verkehrssituation ergibt. Ferner wird der Aufenthalt in einer dunklen Umgebung häufig als unangenehm empfunden und fördert darüber hinaus eine Ermüdung der Fahrers.

Aus der JP-OS 05 270 314 ist eine Innenraumbeleuchtung für Busse bekannt, wobei eine Farbe des von der Beleuchtung ausgestrahlten Lichtes in Abhängigkeit von einer Außentemperatur verändert werden kann. Dabei ist ein als kühl empfundenes Licht bei hohen Außentemperaturen vorgesehen und ein als warm empfundenes Licht bei niedrigen Außentemperaturen. Der Nachteil dieser Ausführung ist darin zu sehen, dass eine Außentemperatur in keiner Beziehung zu einer Innentemperatur einer subjektiven Temperaturempfindung eines Insassen steht. Daher kann eine Beleuchtung nach der genannten Schrift im Extremfall sogar als störend empfunden werden.

Aus JP-A-05270314 ist ein weiteres Innenraumbeleuchtungssystem eines Kraftfahrzeuges bekannt, bei dem eine Helligkeit und/oder eine Farbe in Abhängigkeit einer gemessenen Außentemperatur sich verändert.

Der vorliegenden Erfindung liegt somit die Aufgabe zugrunde, eine Innenraumbeleuchtung für Kraftfahrzeuge und ein Steuerungsverfahren für diese vorzuschlagen, mit der/dem sichergestellt ist, dass ein Fahrzeuginsasse jederzeit optimale Lichtverhältnisse vorfindet und sich damit im Fahrzeug wohlfühlt.

Diese Aufgabe wird durch ein lnnenraumbeleuchtungssystem mit den Merkmalen des Anspruchs 1 und ein Steuerungsverfahren für dieses mit den Merkmalen des Anspruchs 12 gelöst.

Die Grundidee der Erfindung beruht darauf, dass bei einem Aufenthalt eines Insassen in einem Fahrzeug ständig wenigstens eine Grundbeleuchtung des Innenraums durch ein Licht mit einer als angenehm empfundenen Farbe aufrecht erhalten wird. Das erfindungsgemäße Innenraumbeleuchtungssystem eines Kraftfahrzeuges umfasst daher eine Beleuchtungsvorrichtung, wobei eine Farbe eines von der Beleuchtungsvorrichtung ausgestrahlten Lichtes in Abhängigkeit von wenigstens einem Betriebsparameter und/oder wenigstens einem Umgebungsparameter des Kraftfahrzeuges automatisch veränderbar ist, wobei wenigstens ein von einem Fahrzeuginsassen beeinflussbarer und/oder beinflusster Betriebsparameter des Kraftfahrzeuges erfasst und die Farbe des von der Beleuchtungsvorrichtung ausgestrahlten Lichtes in Abhängigkeit des wenigstens einen Betriebsparameters automatisch verändert wird.

Die Maßnahmen der vorliegenden Erfindung gewährleisten eine Beleuchtung des Fahrzeuginnenraumes mit einem Licht, bei dem der Fahrgast Gegenstände in dem Innenraum mühelos erkennen kann und beispielsweise Karten wenigstens über eine kurze Dauer lesen kann, ohne seine Sehkraft zu überanstrengen. Dabei sollte die Beleuchtungsvorrichtung selbstverständlich derart angeordnet beziehungsweise ihre Helligkeit derart abgestimmt sein, dass der Fahrer nicht geblendet oder seine Wahrmehmungsfähigkeit beeinträchtigt wird und die Verkehrssituation noch mit ausreichendem Kontrast wahrnehmen kann. Indem die Farbe des von der Beleuchtungsvorrichtung ausgestrahlten Lichtes von wenigstens einem von dem Fahrzeuginsassen beeinflussten Betriebsparameter verändert wird, wird eine Atmosphäre geschaffen, die ständig an ein subjektives Verhalten und/oder eine Präferenz des Fahrzeuginsassen angepasst ist. Dies trägt erheblich zu einem Wohlbefinden und einem Stressabbau des Fahrzeuginsassen bei, wodurch die Verkehrssicherheit aktiv erhöht wird.

Es ist bevorzugt vorgesehen, dass die ausgestrahlte Farbe der Beleuchtungsvorrichtung in Abhängigkeit einer Abweichung einer Ist-Temperatur von einer von einem Fahrzeuginsassen vorgegebenen Soll-Temperatur des Fahrzeuginnenraumes veränderbar ist. Hierzu umfasst das Innenraumbeleuchtungssystem nach einer bevorzugten Ausgestaltung einen Sensor zur Erfassung eines Betriebszustandes einer Klimaanlage oder einer Heizungsanlage, wobei ein Ausgangssignal des Sensors von der Steuereinheit eingelesen wird. Alternativ kann auch ein Temperatursensor zur Erfassung einer Temperatur des Innenraumes vorgesehen sein, wobei die Steuereinheit ein Ausgangssignal des Temperatursensors mit einer vorgegebenen Soll-Temperatur vergleicht. Verfahrensgemäß wird die Farbe des Lichtes - der zweiten Beleuchtungsvorrichtung in Abhängigkeit des Betriebszustandes der Klimaanlage beziehungsweise der Heizungsanlage beziehungsweise der Abweichung vom Sollwert verändert. Dabei wird entsprechend einer bevorzugten Ausgestaltung eine als kühl empfundene Farbe eingestellt, wenn eine Kühlung der Klimaanlage, ein Nichtheizen der Heizungsanlage beziehungsweise ein Überschreiten der Soll-Temperatur festgestellt wird. Umgekehrt wird eine als warm empfundene Farbe eingestellt, wenn ein Heizen der Klimaanlage oder der Heizungsanlage beziehungsweise ein Unterschreiten der Soll-Temperatur vorliegt. Auf diese Weise können wenigstens in einem gewissen Umfang Abweichungen der Fahrzeuginnentemperatur von einer individuell von den Insassen bevorzugten Temperatur kompensiert werden.

Eine vorteilhafte Ausführungsform des erfindungsgemäßen Innenraumbeleuchtungssystems sieht ferner vor, dass die von der Beleuchtungsvorrichtung ausgestrahlte Farbe in Abhängigkeit einer von einem Fahrzeugfahrer vorgegebenen Geschwindigkeit des Kraftfahrzeuges veränderbar ist. Hierfür umfasst das Innenraumbeleuchtungssystem einen Sensor zur Erfassung der Fahrzeuggeschwindigkeit, dessen Ausgangssignal von der Steuereinheit eingelesen wird. Dieser Sensor kann beispielsweise auch ein ohnehin vorhandener Tachogeber sein. Es ist dabei bevorzugt vorgesehen, dass eine konzentrationsfördemde und/oder beruhigende Farbe eingestellt wird, wenn eine Fahrzeuggeschwindigkeit einen vorgegebenen Schwellenwert überschreitet. Als Farbe mit einer solchen Wirkung ist beispielsweise Grün bekannt. Dagegen hat sich konzentrationsfördemdes blaues Licht bei niedrigen Geschwindigkeiten bewährt.

In einem Fahrzeug kann entweder wahlweise die temperaturgeregelte oder die geschwindigkeitsgeregelte Farbsteuerung der Beleuchtungsvorrichtung realisiert sein oder eine Kombination von beiden. Im letzteren Fall kann beispielsweise vorgesehen sein, dass unterhalb einer vorgegebenen Geschwindigkeitsschwelle das Lichtmanagement temperaturabhängig erfolgt und bei Überschreitung dieser Schwelle die Beleuchtung geschwindigkeitsorientiert auf ein grünes Licht geregelt wird.

Nach einer sehr vorteilhaften Ausführung umfasst die Beleuchtungsvorrichtung wenigstens zwei unabhängig voneinander steuerbare Lichtquellen, wobei die wenigstens zwei Lichtquellen Licht unterschiedlicher Farbe ausstrahlen. Ein Ändern der insgesamt von der Befeuchtungsvorrichtung ausgestrahlten Farbe kann erfolgen, indem eine Helligkeit einer ersten Lichtquelle vergrößert und eine Helligkeit einer zweiten Lichtquelle verkleinert wird. Nach einer besonderen Ausgestaltung strahlt eine erste Lichtquelle der Beleuchtungsvorrichtung weißes Licht aus und die weitere(n) Lichtquelle(n) ein Licht einer anderen Farbe. Gemäß dieser Ausgestaltung wird ein weißes Licht der Beleuchtungsvorrichtung durch Vergrößern einer Helligkeit der ersten Lichtquelle und Verkleinern der Helligkeit oder Ausschalten der mindestens einen zweiten Lichtquelle erzeugt. Eine alternative Ausgestaltung des Innenraumbeleuchtungssystems sieht vor, dass ein weißes Licht der Beleuchtungsvorrichtung durch Überlagerung des Lichtes mehrerer Lichtquellen darstellbar ist. Dies kann auf einfache Weise durch drei Lichtquellen realisiert werden, welche beispielsweise Licht in den drei Grundfarben Rot, Gelb und Blau ausstrahlen, aus deren Überlagerung weißes Licht resultiert. Durch geeignete Mischung dieser Lichtquellen kann auch jede beliebige andere Lichtfarbe erzeugt werden.

Zusätzlich zu der Beleuchtungsvorrichtung mit variabler Lichtfarbe kann das Innenraumbeleuchtungssystem auch eine Standard-Beleuchtungsvorrichtung umfassen, die ein im wesentlichen weißes Licht ausstrahlt und deren Helligkeit in Abhängigkeit einer Fahrzeugtür und/oder einer Zentralverriegelung regelbar ist. Ist eine solche Beleuchtungsvorrichtung vorgesehen, die gemäß dem Stand der Technik eine Innenraumbeleuchtung mit einem hellen weißen Licht beim Ein- und Aussteigen eines Insassen übernimmt, kann auf die Möglichkeit der Erzeugung weißen Lichts durch die erste erfindungsgemäße Beleuchtungsvorrichtung verzichtet werden.

Erfindungsgemäß kann die Beleuchtungsvorrichtung eine diffuse Innenraumbeleuchtung, eine indirekte Komfortbeleuchtung, eine Fußraumbeleuchtung, eine Türgriffbeleuchtung oder eine Kombination von diesen umfassen. Dabei kann insbesondere auch eine Helligkeit dieser Komponenten unabhängig voneinander steuerbar sein.

Gemäß einer besonders bevorzugten Ausgestaltung ist die Beleuchtungsvorrichtung manuell von den Fahrzeuginsassen beeinflussbar. Dabei kann vorgesehen sein, dass der Fahrzeuginsasse Helligkeit oder Farbton der Beleuchtungsvorrichtung oder beides jederzeit beeinflussen kann.

Nach einer bevorzugten Ausgestaltung wird das Innenraumbeleuchtungssystem mit einem Öffnen einer Fahrzeugtür eingeschaltet und auf ein helles und im wesentlichen weißes Licht geregelt. Wie bereits erläutert, kann diese weiße Innenraumbeleuchtung entweder durch eine zusätzliche Standard-Beleuchtungsvorrichtung oder die entsprechend ausgelegte erfindungsgemäße Beleuchtungsvorrichtung realisiert werden. Es ist ferner vorteilhaft vorgesehen, dass die Beleuchtungsvorrichtung mit einem Schließen der Fahrzeugtür oder mit einer vorgegebenen Verzögerung, spätestens aber mit einem Starten des Motors, auf ein farbiges gedämpftes Licht geregelt wird. Dieses sollte nur dann geschehen, wenn ein Insasse sich in dem Fahrzeug aufhält oder solange bis das Fahrzeug verriegelt ist. Zusätzlich kann die Aktivierung der Beleuchtungsvorrichtung während eines Fahrzeugbetriebes davon abhängig gemacht werden, dass eine Fahrzeugaußenbeleuchtung ausgeschaltet ist. Auf diese Weise kann bei Vorliegen einer ausreichenden Umgebungshelligkeit ein unnötiges Einschalten der Beleuchtungsvorrichtung vermieden werden.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch eine Anordnung einer lnnenraumbeleuchtungsvorrichtung gemäß einer Ausführungsform der vorliegenden Erfindung und
- Figur 2: schematisch eine Anordnung einer Innenraumbeleuchtungsvorrichtung gemäß einer weiteren Ausgestaltung der vorliegenden Erfindung.

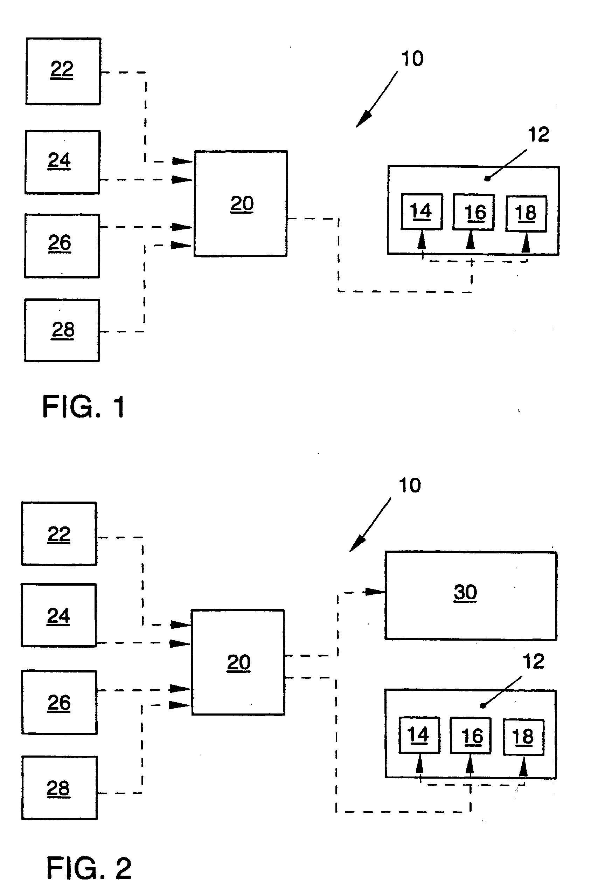

Gemäß einer in Figur 1 gezeigten ersten Ausführungsform umfasst das insgesamt mit 10 bezeichnete Innenraumbeleuchtungssystem eines Kraftfahrzeuges eine Beleuchtungsvorrichtung 12 mit drei Lichtquellen 14, 16, 18. Die drei Lichtquellen 14, 16, 18 strahlen jeweils ein Licht mit unterschiedlicher Farbe aus. Gemäß dem dargestellten Beispiel seien dies die drei Grundfarben Rot, Gelb und Blau. Eine Helligkeit der drei Lichtquellen 14, 16, 18 ist unabhängig voneinander durch das Steuergerät 20 regelbar. Eine Farbe eines insgesamt von der Beleuchtungsvorrichtung 12 ausgestrahlten Lichtes kann durch Verringern oder Vergrößern der Helligkeit einer oder mehrerer Lichtquellen 14, 16, 18 verändert werden. Aus der Überlagerung gleicher Lichtintensitäten der drei Lichtquellen 14, 16, 18 resultiert ein weißes Licht der Beleuchtungsvorrichtung 12. Die Farbe des von der Beleuchtungsvorrichtung 12 ausgestrahlten Lichtes wird in Abhängigkeit von wenigstens einem von einem Fahrzeuginsassen beeinflussten Betriebsparameter des Kraftfahrzeugs automatisch verändert. Beispielsweise wird die Lichtfarbe in Abhängigkeit einer Abweichung zwischen einer Ist-Temperatur und einer von einem Fahrzeuginsassen vorgegebenen Soll-Temperatur des Fahrzeuginnenraumes verändert. Zu diesem Zweck umfasst das Innenraumbeleuchtungssystem 10 einen Sensor 22, welcher einen Betriebszustand einer Klimaanlage erfasst und ein Ausgangssignal an die Steuereinheit 20 übermittelt. Stellt der Sensor 22 ein Heizen der Klimaanlage fest, so regelt die Steuereinheit 20 die Beleuchtungsvorrichtung 12 auf eine als warm empfundene Farbe, vorzugsweise ein Rotton, da eine Fahrzeuginnentemperatur offenbar eine durch einen Fahrzeuginsassen vorgegebene Solltemperatur unterschreitet. Umgekehrt wird eine als kühl empfundene Lichtfarbe, beispielsweise Blau, der Beleuchtungsvorrichtung 12 eingestellt, wenn der Sensor 22 ein Nichtheizen der Klimaanlage detektiert. Zusätzlich kann die Farbe der Beleuchtungsvorrichtung 12 in Abhängigkeit von einer Fahrzeuggeschwindigkeit gesteuert werden. Hierfür übermittelt ein Sensor 24, der beispielsweise ein Tachogeber sein kann, die aktuelle Fahrzeuggeschwindigkeit an das Steuergerät 20, welches bei Überschreitung einer vorgegebenen Geschwindigkeitsschwelle eine Lichtfarbe mit konzentrationsfördernder und/oder beruhigender Wirkung, vorzugsweise grünes Licht, vorgibt. Selbstverständlich kann die Lichtfarbe der Beleuchtungsvorrichtung 12 auch ausschließlich temperatur- oder geschwindigkeitsabhängig variiert werden.

Ein weiterer Sensor 26 registriert ein Öffnen und Schließen der Fahrzeugtüren. Zusätzlich kann dieser auch mit einer Zentralverriegelung gekoppelt sein. Sobald der Sensor 26 ein Öffnen einer Fahrzeugtür oder eine Entriegelung der Fahrzeugverriegelung erfasst, schaltet das Steuergerät 20 die Beleuchtungsvorrichtung 12 ein und regelt sie auf ein helles und im wesentlichen weißes Licht, so dass eine Orientierung eines Insassen während des Ein- oder Aussteigens oder eines Beladungsvorgangs erleichtert wird. Mit dem Schließen der Fahrzeugtür, gegebenenfalls mit einer kurzen Verzögerung oder mit einem Starten des Motors, wird die Helligkeit der Beleuchtungsvorrichtung 12 verringert und eine Farbe des ausgestrahlten Lichtes in Abhängigkeit von den Signalen der Sensoren 22, 24 geregelt. Um einen unnötigen Betrieb der Beleuchtungsvorrichtung 12 zu vermeiden, kann dieser zusätzlich von einer Außenhelligkeit abhängig gemacht werden, welche am leichtesten durch einen Sensor 28 erfasst wird, der ermittelt, ob eine Außenbeleuchtung des Fahrzeugs ein- oder ausgeschaltet ist.

Eine alternative Ausgestaltung eines Innenraumbeleuchtungssystems ist in Figur 2 dargestellt. Gleiche Elemente wie in Figur 1 sind durch die gleichen Bezugszeichen gekennzeichnet. Nach dieser Ausführung umfasst das Innenraumbeleuchtungssystem 10 neben der Beleuchtungsvorrichtung 12 eine Standard-Beleuchtungsvorrichtung 30, die einer Innenraumbeleuchtung gemäß dem Stand der Technik entspricht. Die Standard-Beleuchtungsvorrichtung 30 strahlt ein im wesentlichen weißes Licht aus und wird vorzugsweise in Abhängigkeit durch den durch den Sensor 26 erfassten Zustand der Fahrzeugtüren oder der Fahrzeugverriegelung gesteuert. Während des Einsteigens von Fahrzeuginsassen erhellt die vorzugsweise am Fahrzeughimmel angeordnete Standard-Beleuchtungsvorrichtung 30 den Innenraum. Nach dem Schließen der Fahrzeugtür oder mit einem Starten des Motors wird die Helligkeit der Standard-Beleuchtungsvorrichtung 30 abrupt oder allmählich heruntergeregelt, während die Helligkeit der Beleuchtungsvorrichtung 12 gegenläufig vergrößert wird. Während des Fahrzeugbetriebes wird die Farbe des von der Beleuchtungsvorrichtung 12 ausgestrahlten Lichts auf die bereits beschriebene Weise in Abhängigkeit von der Klimaanlage (Sensor 22) und/oder der Fahrzeuggeschwindigkeit (Sensor 24) geregelt.

In der in Figur 2 dargestellten Ausgestaltung der Erfindung umfasst die Beleuchtungsvorrichtung 12 beispielsweise eine indirekte Komfortbeleuchtung, eine Fußraumbeleuchtung und/oder eine Türgriffbeleuchtung. Nach der in Figur 1 dargestellten Ausgestaltung sollte die Beleuchtungsvorrichtung 12 hingegen zusätzlich eine diffuse Innenraumbeleuchtung einschließen, welche eine bei Ein- und Aussteigesowie Be- und Entladungsvorgängen erforderliche Ausleuchtung gewährleistet.

### BEZUGSZEICHENLISTE

- 10: Innenraumbeleuchtungssystem
- 12: Beleuchtungsvorrichtung
- 14: Lichtquelle
- 16: Lichtquelle
- 18: Lichtquelle
- 20: Steuergerät
- 22: Sensor (Klimaanlage/Heizungsanlage)
- 24: Sensor (Fahrzeuggeschwindigkeit)
- 26: Sensor (Fahrzeugtür)
- 28: Sensor (Außenbeleuchtung)
- 30: Standard-Beleuchtungsvorrichtung

## Patentansprüche

1. Innenraumbeleuchtungssystem eines Kraftfahrzeuges, welches eine Beleuchtungsvorrichtung zum Beleuchten eines Fahrzeuginnenraumes und eine Steuereinheit zur Regelung einer Helligkeit und/oder einer Farbe eines ausgestrahlten Lichtes der Beleuchtungsvorrichtung umfasst, wobei die Farbe des von der Beleuchtungsvorrichtung (12) ausgestrahlten Lichtes in Abhängigkeit von wenigstens einem Betriebsparameter und/oder wenigstens einem Umgebungsparameter des Kraftfahrzeuges automatisch veränderbar ist, **dadurch gekennzeichnet, dass** der wenigstens eine Betriebsparameter ein von einem Fahrzeuginsassen beeinflussbarer und/oder beeinflusster Betriebsparameter ist.

2. Innenraumbeleuchtungssystem nach Anspruch 1, **dadurch gekennzeichnet, dass** die Farbe des von der Beleuchtungsvorrichtung (12) ausgestrahlten Lichtes in Abhängigkeit einer Abweichung zwischen einer Ist-Temperatur und einer von einem Fahrzeuginsassen vorgegebenen Soll-Temperatur des Fahrzeuginnenraumes veränderbar ist.

3. Innenraumbeleuchtungssystem nach Anspruch 2, **dadurch gekennzeichnet, dass** das Innenraumbeleuchtungssystem (10) einen Sensor (22) zur Erfassung eines Betriebszustandes einer Klimaanlage oder einer Heizungsanlage umfasst und ein Ausgangssignal des Sensors (22) von der Steuereinheit (20) eingelesen wird.

4. Innenraumbeleuchtungssystem nach Anspruch 2, **dadurch gekennzeichnet, dass** das Innenraumbeleuchtungssystem (10) einen Temperatursensor (22) zur Erfassung einer Temperatur des Innenraumes umfasst, und ein Ausgangssignal des Sensors (22) von der Steuereinheit (20) eingelesen wird.

5. Innenraumbeleuchtungssystem nach einem der vorhergehenden Ansprüche, **dadurch gekennzeichnet, dass** die Farbe des von der Beleuchtungsvorrichtung (12) ausgestrahlten Lichtes in Abhängigkeit einer von einem Fahrzeugfahrer vorgegebenen Geschwindigkeit des Kraftfahrzeuges veränderbar ist.

6. Innenraumbeleuchtungssystem nach Anspruch 5, **dadurch gekennzeichnet, dass** das Innenraumbeleuchtungssystem (10) einen Sensor (24) zur Erfassung der Fahrzeuggeschwindigkeit umfasst, dessen Ausgangssignal von der Steuereinheit (20) eingelesen wird.

7. Innenraumbeleuchtungssystem nach einem der vorhergehenden Ansprüche, **dadurch gekennzeichnet, dass** die Beleuchtungsvorrichtung (12) mindestens zwei unabhängig voneinander steuerbare Lichtquellen (14, 16, 18) umfasst, wobei die mindestens zwei Lichtquellen (14, 16, 18) Licht unterschiedlicher Farbe ausstrahlen.

8. lnnenraumbeleuchtungssystem nach Anspruch 7, **dadurch gekennzeichnet, dass** eine erste Lichtquelle (14) der Beleuchtungsvorrichtung (12) weißes Licht ausstrahlt.

9. Innenraumbeleuchtungssystem nach Anspruch 7, **dadurch gekennzeichnet, dass** ein weißes Licht der Beleuchtungsvorrichtung (12) durch Überlagerung des Lichtes mehrerer Lichtquellen (14, 16, 18) darstellbar ist.

10. Innenraumbeleuchtungssystem nach einem der vorhergehenden Ansprüche, **dadurch gekennzeichnet, dass** die Beleuchtungsvorrichtung (12) eine indirekte Komfortbeleuchtung, eine Fußraumbeleuchtung, eine Türgriffbeleuchtung oder eine diffuse Innenraumbeleuchtung oder eine Kombination von diesen umfasst.

11. Innenraumbeleuchtungssystem nach einem der vorhergehenden Ansprüche, **dadurch gekennzeichnet, dass** die Beleuchtungsvorrichtung (12) manuell von dem Fahrzeuginsassen beeinflussbar ist.

12. Verfahren zur Steuerung eines Innenraumbeleuchtungssystems eines Kraftfahrzeuges mit einer Beleuchtungsvorrichtung, wobei eine Helligkeit und/oder eine Farbe eines ausgestrahlten Lichtes der Beleuchtungsvorrichtung regelbar ist, wobei wenigstens ein Betriebsparameter und/oder wenigstens ein Umgebungsparameter des Kraftfahrzeuges erfasst und die Farbe. des von der Beleuchtungsvorrichtung (12) ausgestrahlten Lichtes in Abhängigkeit des wenigstens einen Betriebsparameters und/oder wenigstens einen Umgebungsparameters automatisch verändert wird, **dadurch gekennzeichnet, dass** der wenigstens eine Betriebsparameter ein von einem Fahrzeuginsassen beeinflussbarer und/oder beeinflusster Betriebsparameter ist.

13. Verfahren nach Anspruch 12, **dadurch gekennzeichnet, dass** die Farbe des Lichtes der Beleuchtungsvorrichtung (12) in Abhängigkeit von einem Betriebszustand einer Klimaanlage oder einer Heizungsanlage oder einer Abweichung einer Ist-Temperatur von einer Soll-Temperatur des Innenraumes verändert wird.

14. Verfahren nach Anspruch 13, **dadurch gekennzeichnet, dass** eine als kalt empfundene Farbe eingestellt wird, wenn eine Kühlung der Klimaanlage, ein Nichtheizen der Heizungsanlage beziehungsweise eine Überschreitung der Soll-Temperatur festgestellt wird, und eine als warm empfundene Farbe eingestellt wird, wenn ein Heizen der Klimaanlage oder der Heizungsanlage beziehungsweise eine Unterschreitung der Soll-Temperatur festgestellt wird.

15. Verfahren nach einem der Ansprüche 12 bis 14, **dadurch gekennzeichnet, dass** die Farbe des Lichtes der Beleuchtungsvorrichtung (12) in Abhängigkeit von einer Fahrzeuggeschwindigkeit verändert wird.

16. Verfahren nach Anspruch 15, **dadurch gekennzeichnet, dass** eine konzentrationsfördemde und/oder beruhigende Farbe eingestellt wird, wenn eine Fahrzeuggeschwindigkeit einen vorgegebenen Schwellenwert überschreitet.

17. Verfahren nach einem der vorhergehenden Ansprüche 12 bis 16, **dadurch gekennzeichnet, dass** die Beleuchtungsvorrichtung (12) wenigstens zwei Lichtquellen (14, 16, 18) umfasst, wobei die wenigstens zwei Lichtquellen (14, 16, 18) Licht unterschiedlicher Farbe ausstrahlen, und ein Ändern der Farbe der Beleuchtungsvorrichtung (12) durch Vergrößern einer Helligkeit einer ersten Lichtquelle (14) und Verkleinern der Helligkeit einer zweiten Lichtquelle (16, 18) erfolgt.

18. Verfahren nach Anspruch 17, **dadurch gekennzeichnet, dass** die erste Lichtquelle (14) weißes Licht ausstrahlt und ein weißes Licht der Beleuchtungsvorrichtung (12) durch Vergrößern einer Helligkeit der ersten Lichtquelle (14) und Verkleinern der Helligkeit der mindestens einen zweiten Lichtquelle (16, 18) erzeugt wird.

19. Verfahren nach Anspruch 17, **dadurch gekennzeichnet, dass** ein weißes Licht der Beleuchtungsvorrichtung (12) durch Überlagerung des Lichtes mehrerer Lichtquellen (14, 16, 18) dargestellt wird.

20. Verfahren nach einem der Ansprüche 12 bis 19, **dadurch gekennzeichnet, dass** das Innenraumbeleuchtungssystem (10) mit einem Öffnen einer Fahrzeugtür eingeschaltet und auf ein im wesentlichen weißes, helles Licht geregelt wird.

21. Verfahren nach Anspruch 20, **dadurch gekennzeichnet, dass** die Beleuchtungsvorrichtung (12) mit einem Schließen der Fahrzeugtür oder mit einer vorgegebenen Verzögerung, spätestens aber mit einem Starten des Motors, auf ein farbiges, gedämpftes Licht geregelt wird, wenn ein Insasse sich in dem Fahrzeug befindet.

22. Verfahren nach einem der Ansprüche 12 bis 21, **dadurch gekennzeichnet, dass** die Beleuchtungsvorrichtung (12) während eines Fahrzeugbetriebes nur dann aktiviert wird, wenn eine Fahrzeugaußenbeleuchtung angeschaltet ist.

## Claims

1. Interior lighting system for a motor vehicle, which comprises a lighting device for illuminating a vehicle interior and a control unit for controlling the brightness and/or the colour of the light emitted by the lighting device, it being possible to automatically vary the colour of the light emitted by the lighting device (12) as a function of at least one operating parameter and/or at least one environmental parameter of the motor vehicle, **characterized in that** the at least one operating parameter is an operating parameter which can be and/or is influenced by a vehicle occupant.

2. Interior lighting system according to Claim 1, **characterized in that** the colour of the light emitted by the lighting device (12) can be varied as a function of a discrepancy between an actual temperature and a desired temperature prescribed by a vehicle occupant for the vehicle interior.

3. Interior lighting system according to Claim 2, **characterized in that** the interior lighting system (10) comprises a sensor (22) for detecting an operating state of an air-conditioning system or a heating system, and an output signal of the sensor (22) is read by the control unit (20).

4. Interior lighting system according to Claim 2, **characterized in that** the interior lighting system (10) comprises a temperature sensor (22) for detecting the temperature of the interior, and an output signal of the sensor (22) is read by the control unit (20).

5. Interior lighting system according to one of the preceding claims, **characterized in that** the colour of the light emitted by the lighting device (12) can be varied as a function of a speed prescribed by a vehicle driver for the motor vehicle.

6. Interior lighting system according to Claim 5, **characterized in that** the interior lighting system (10) comprises a sensor (24) for detecting the vehicle speed, whose output signal is read by the control unit (20).

7. Interior lighting system according to one of the preceding claims, **characterized in that** the lighting device (12) comprises at least two light sources (14, 16, 18) which can be controlled independently of one another, the at least two light sources (14, 16, 18) emitting light of a different colour.

8. Interior lighting system according to Claim 7, **characterized in that** a first light source (14) of the lighting device (12) emits white light.

9. Interior lighting system according to Claim 7, **characterized in that** a white light of the lighting device (12) can be produced by superimposing the light of two or more light sources (14, 16, 18).

10. Interior lighting system according to one of the preceding claims, **characterized in that** the lighting device (12) comprises indirect convenience lighting, footwell lighting, door-handle lighting or diffuse interior lighting or a combination of these.

11. Interior lighting system according to one of the preceding claims, **characterized in that** the lighting device (12) can be influenced manually by the vehicle occupant.

12. Method for controlling an interior lighting system for a motor vehicle having a lighting device, it being possible to control the brightness and/or the colour of the light emitted by the lighting device, at least one operating parameter and/or at least one environmental parameter of the motor vehicle being detected, and the colour of the light emitted by the lighting device (12) being varied automatically as a function of the at least one operating parameter and/or at least one environmental parameter, **characterized in that** the at least one operating parameter is an operating parameter which can be and/or is influenced by a vehicle occupant.

13. Method according to Claim 12, **characterized in that** the colour of the light of the lighting device (12) is varied as a function of an operating state of an air-conditioning system or a heating system or of a discrepancy between an actual temperature and a desired temperature for the interior.

14. Method according to Claim 13, **characterized in that** a colour which is perceived to be cold is set when it is established that the air-conditioning system is cooling, the heating system is not heating or the desired temperature has been overshot, and a colour which is perceived to be warm is set when it is established that the air-conditioning system or the heating system is heating or the desired temperature has been undershot.

15. Method according to one of Claims 12 to 14, **characterized in that** the colour of the light of the lighting device (12) is varied as a function of the vehicle speed.

16. Method according to Claim 15, **characterized in that** a colour which promotes concentration and/or is relaxing is set when the vehicle speed overshoots a predetermined threshold value.

17. Method according to one of the preceding Claims 12 to 16, **characterized in that** the lighting device (12) comprises at least two light sources (14, 16, 18), the at least two light sources (14, 16, 18) emitting light of a different colour, and the colour of the lighting device (12) is varied by increasing the brightness of a first light source (14) and reducing the brightness of a second light source (16, 18).

18. Method according to Claim 17, **characterized in that** the first light source (14) emits white light, and a white light of the lighting device (12) is produced by increasing the brightness of the first light source (14) and reducing the brightness of the at least one second light source (16, 18).

19. Method according to Claim 17, **characterized in that** a white light of the lighting device (12) is produced by superimposing the light of two or more light sources (14, 16, 18).

20. Method according to one of Claims 12 to 19, **characterized in that** the interior lighting system (10) is switched on when a vehicle door is opened and is adjusted to a substantially white, bright light.

21. Method according to Claim 20, **characterized in that**, when there is an occupant in the vehicle, the lighting device (12) is adjusted to a coloured, dimmed light when the vehicle door is closed or with a predetermined delay, but at the latest when the engine is started.

22. Method according to one of Claims 12 to 21, **characterized in that** the lighting device (12) is only activated during vehicle operation when the exterior lighting of the vehicle is switched on.

## Revendications

1. Système d'éclairage de l'habitacle d'un véhicule automobile, qui comprend un dispositif d'éclairage pour l'éclairage d'un habitacle de véhicule et une unité de commande pour régler la clarté et/ou la couleur d'une lumière émise du dispositif d'éclairage, la couleur de la lumière émise par le dispositif d'éclairage (12) pouvant être modifiée automatiquement en fonction d'au moins un paramètre de fonctionnement et/ou d'au moins un paramètre d'environnement du véhicule automobile, **caractérisé en ce que** l'au moins un paramètre de fonctionnement est un paramètre de fonctionnement pouvant être influencé et/ou influencé par un occupant du véhicule.

2. Système d'éclairage de l'habitacle selon la revendication 1, **caractérisé en ce que** la couleur de la lumière émise par le dispositif d'éclairage (12) peut être modifiée en fonction d'un écart entre une température réelle et une température de consigne de l'habitacle du véhicule prédéfinie par un occupant du véhicule.

3. Système d'éclairage de l'habitacle selon la revendication 2, **caractérisé en ce que** le système d'éclairage de l'habitacle (10) comprend un capteur (22) pour détecter un état de fonctionnement d'une installation de climatisation ou d'une installation de chauffage et un signal de sortie du capteur (22) est lu par l'unité de commande (20).

4. Système d'éclairage de l'habitacle selon la revendication 2, **caractérisé en ce que** le système d'éclairage de l'habitacle (10) comprend un capteur de température (22) pour détecter une température de l'habitacle, et un signal de sortie du capteur (22) est lu par l'unité de commande (20).

5. Système d'éclairage de l'habitacle selon l'une quelconque des revendications précédentes, **caractérisé en ce que** la couleur de la lumière émise par le dispositif d'éclairage (12) peut être modifiée en fonction d'une vitesse du véhicule automobile prédéfinie par un conducteur du véhicule.

6. Système d'éclairage de l'habitacle selon la revendication 5, **caractérisé en ce que** le système d'éclairage de l'habitacle (10) comprend un capteur (24) pour détecter la vitesse du véhicule, dont le signal de sortie est lu par l'unité de commande (20).

7. Système d'éclairage de l'habitacle selon l'une quelconque des revendications précédentes, **caractérisé en ce que** le dispositif d'éclairage (12) comprend au moins deux sources de lumière (14, 16, 18) pouvant être commandées indépendamment l'une de l'autre, les au moins deux sources de lumière (14, 16, 18) émettant de la lumière de couleur différente.

8. Système d'éclairage de l'habitacle selon la revendication 7, **caractérisé en ce qu'**une première source de lumière (14) du dispositif d'éclairage (12) émet de la lumière blanche.

9. Système d'éclairage de l'habitacle selon la revendication 7, **caractérisé en ce qu'**une lumière blanche du dispositif d'éclairage (12) peut être constituée par superposition de la lumière de plusieurs sources de lumière (14, 16, 18).

10. Système d'éclairage de l'habitacle selon l'une quelconque des revendications précédentes, **caractérisé en ce que** le dispositif d'éclairage (12) comprend un éclairage de confort indirect, un éclairage de l'espace pour les pieds, un éclairage de la poignée de porte ou un éclairage de l'habitacle diffus ou une combinaison de ceux-ci.

11. Système d'éclairage de l'habitacle selon l'une quelconque des revendications précédentes, **caractérisé en ce que** le dispositif d'éclairage (12) peut être influencé manuellement par l'occupant du véhicule.

12. Procédé de commande d'un système d'éclairage de l'habitacle d'un véhicule automobile comprenant un dispositif d'éclairage, dans lequel la clarté et/ou la couleur d'une lumière émise du dispositif d'éclairage peut être réglée, dans lequel au moins un paramètre de fonctionnement et/ou au moins un paramètre d'environnement du véhicule automobile est détecté et la couleur de la lumière émise par le dispositif d'éclairage (12) est modifiée automatiquement en fonction de l'au moins un paramètre de fonctionnement et/ou d'au moins un paramètre d'environnement, **caractérisé en ce que** l'au moins un paramètre de fonctionnement est un paramètre de fonctionnement pouvant être influencé et/ou influencé par un occupant du véhicule.

13. Procédé selon la revendication 12, **caractérisé en ce que** la couleur de la lumière du dispositif d'éclairage (12) est modifiée en fonction d'un état de fonctionnement d'une installation de climatisation ou d'une installation de chauffage ou d'un écart entre une température réelle et une température de consigne de l'habitacle.

14. Procédé selon la revendication 13, **caractérisé en ce que** l'on ajuste une couleur ressentie comme froide lorsqu'un refroidissement de l'installation de climatisation, une absence de chauffage de l'installation de chauffage ou un dépassement de la température de consigne est constaté, et l'on ajuste une couleur ressentie comme chaude lorsqu'un chauffage de l'installation de climatisation ou de l'installation de chauffage, ou un dépassement par le bas de la température de consigne est constaté.

15. Procédé selon l'une quelconque des revendications 12 à 14, **caractérisé en ce que** la couleur de la lumière du dispositif d'éclairage (12) est modifiée en fonction d'une vitesse du véhicule.

16. Procédé selon la revendication 15, **caractérisé en ce que** l'on ajuste une couleur favorisant la concentration et/ou calmante lorsqu'une vitesse du véhicule dépasse une valeur seuil prédéfinie.

17. Procédé selon l'une quelconque des revendications 12 à 16, **caractérisé en ce que** le dispositif d'éclairage (12) comprend au moins deux sources de lumière (14, 16, 18), les au moins deux sources de lumière (14, 16, 18) émettant de la lumière de couleur différente, et une variation de la couleur du dispositif d'éclairage (12) étant effectuée par accroissement de la clarté d'une première source de lumière (14) et réduction de la clarté d'une deuxième source de lumière (16, 18).

18. Procédé selon la revendication 17, **caractérisé en ce que** la première source de lumière (14) émet de la lumière blanche et une lumière blanche du dispositif d'éclairage (12) est produite par accroissement de la clarté de la première source de lumière (14) et réduction de la clarté de l'au moins une deuxième source de lumière (16, 18).

19. Procédé selon la revendication 17, **caractérisé en ce qu'**une lumière blanche du dispositif d'éclairage (12) est constituée par superposition de la lumière de plusieurs sources de lumière (14, 16, 18).

20. Procédé selon l'une quelconque des revendications 12 à 19, **caractérisé en ce que** le système d'éclairage de l'habitacle (10) est enclenché à l'ouverture d'une porte du véhicule et est réglé sur une lumière vive essentiellement blanche.

21. Procédé selon la revendication 20, **caractérisé en ce que** le dispositif d'éclairage (12) est réglé avec la fermeture de la porte du véhicule ou avec un ralentissement prédéfini, mais au plus tard avec un démarrage du moteur, sur une lumière colorée atténuée, lorsqu'un occupant se trouve dans le véhicule.

22. Procédé selon l'une quelconque des revendications 12 à 21, **caractérisé en ce que** le dispositif d'éclairage (12) n'est activé pendant un fonctionnement du véhicule qu'une fois qu'un éclairage extérieur du véhicule est branché.
